# EUROPÄISCHE PATENTANMELDUNG

(11) **EP 0 800 305 A2**
(43) Veröffentlichungstag der Anmeldung: **08.10.1997**
(21) Anmeldenummer: 97810183.0
(22) Anmeldetag: 27.03.1997
(51) Int. Cl.: H04M 3/50

(54) **Verfahren zur Steuerung einer Telephonzentrale**

(30) Priorität: 04.04.1996 CH 877/96
(71) Anmelder: Walther, Mona, 8200 Schaffhausen (DE)
(72) Erfinder: Walther, Mona, 8200 Schaffhausen (DE)
(74) Vertreter: Patentanwaltsbüro Feldmann AG

(57) **Zusammenfassung**

In einem Verfahren zur Steuerung einer Telephonzentrale mit einem Datenverarbeitungsgerät werden mittels des Datenverarbeitungsgerätes Kunden-Anrufe, welche über Eingangsleitungen eingehen, automatisch an einen von mehreren im Datenverarbeitungsgerät registrierten externen Telephonanschlüssen von Hostessen weiterleitet. Dabei führt das Datenverarbeitungsgerät ein Anwesenheits-Verzeichnis der Hostessen, wobei das Datenverarbeitungsgerät einen registrierten externen Telephonanschluss aufgrund eines codierten Anrufes von diesem in das Anwesenheits-Verzeichnis aufnimmt und anhand eines weiteren codierten Anrufes desselben externen Telephonanschlusses diesen aus dem Anwesenheits-Verzeichnis löscht. Nach Entgegennahme eines Kunden-Anrufes wählt das Datenverarbeitungsgerät einen im Anwesenheits-Verzeichnis aufgeführten Telephonanschluss aus und ruft diesen an. Bei Beantwortung dieses Verbindungs-Anrufes von Seiten des externen Telephonanschlusses erstellt das Datenverarbeitungsgerät die Verbindung zwischen Kunde und Hostess.

## Beschreibung

Die vorliegende Erfindung betrifft ein Verfahren zur Steuerung einer Telephonzentrale gemäss Oberbegriff des Patentanspruches 1 sowie eine Vorrichtung zur Durchführung des Verfahrens gemäss Oberbegriff des Patentanspruches 7.

Es sind die diversesten Dienstleistungsunternehmen bekannt, deren Dienstleistungen telephonisch erfolgen, wie beispielsweise das Anbieten von Gesprächspartnern, sogenannte Plaudertelephone, das Erteilen von Auskünften oder Ratschlägen und das Ermöglichen von sexuellen Erlebnissen. Ein Teil der Unternehmen spielt, wenn die Telephonnummer des Unternehmens angewählt wird, einen Tonträger ab, wobei der Anrufer mittels der Tastatur seines Telephones unter mehreren Themen wählen kann. Dies ist beispielsweise für strassenberichte oder Pistenberichte der Wintersportorte geeignet.

Für individuellere Dienstleistungen ist es notwendig, dass der Anrufer mit einer reellen Person kommunizieren kann. Hierfür stehen in diesen Dienstleistungsunternehmen entsprechende Gesprächspartner zur Verfügung. Im folgenden werden diese Gesprächspartner Hostessen genannt, wobei auf die gleichzeitige Nennung des männlichen Synonyms zwecks besserer Lesbarkeit des Textes verzichtet wird.

Die Steuerung der Telephonzentrale derartiger Dienstleistungsunternehmen ist wie folgt aufgebaut:
Der Kunde wählt die Telephonnummer des Dienstleistungsunternehmens an und wird mit der Telephonzentrale verbunden. Teilweise wird der Anrufer zuerst von einem automatischen Tonband aufgefordert, unter verschiedenen Dienstleistungen zu wählen oder auch einige Angaben zu seiner Person zu machen. Die Antworten gibt der Anrufer durch das Drücken von bestimmten Tasten auf seiner Telephontastatur ein.
Die Telephonzentrale gibt anschliessend den Anruf an eine der Zuständigen und gerade verfügbaren Hostessen weiter. Diese führt nun das Gespräch mit dem Anrufer. Beendet sie das Gespräch, so wird der Anrufer wieder mit der Telephonzentrale verbunden und kann, wiederum durch Betätigung seiner Telephontastatur, eine neue Gesprächspartnerin wünschen.

Die Hostessen sind während ihrer gesamten Arbeitszeit stets mit der Telephonzentrale durch eine offene Telephonleitung verbunden, das heisst sie sind online. Wird gerade kein Gespräch geführt, so ertönt über ihren Lautsprecher oder ihren Hörer Musik, um die Wartezeiten zu überbrücken. Da sie sofort verfügbar sein müssen, können sie sich während der Dienstzeit nicht von ihrem Arbeitsplatz entfernen, da der Kunde andernfalls nach Vermittlung durch die Telephonzentrale gar keinen Gesprächspartner antrifft.

Einige Dienstleistungsunternehmen arbeiten zudem mit Hostessen, welche als Heimarbeiterinnen tätig sind, also ihren Arbeitsplatz zuhause haben. Dies hat den Vorteil, dass keine Anfahrwege zum Arbeitsplatz anfallen. Zudem kann der Arbeitgeber auch Angestellte in ländlichen oder weiter entfernten, verstreuten Gegenden anwerben, wodurch einerseits die Auswahl an möglichen Angestellten grösser wird und andererseits Kosten gesenkt werden, da die Entlöhnung gerade in ländlichen Gegenden tiefer liegen kann als in Stadtnähe.
Auch diese Systeme weisen jedoch den denselben Nachteil auf, nämlich dass die Heimarbeiterinnen stets online mit der Telephonzentrale verbunden sein müssen. Dadurch können sie sich zu Hause nicht frei bewegen, da sie jeden Anruf sogleich beantworten müssen. Würde der Anrufer, nachdem er von der automatischen Telephonzentrale weitergeleitet worden ist, keinen Gesprächspartner vorfinden, so würde er aufhängen. Ein weiterer Nachteil ist, dass die Kosten der offenen Telephonleitungen von der Telephonzentrale zu den Hostessen zu Lasten des Dienstleistungsunternehmens gehen, wodurch die Betreibungskosten gerade bei stark dezentraler Verteilung der Hostessen relativ hoch liegen.

Es ist deshalb Aufgabe der Erfindung, ein Verfahren zur Steuerung einer Telephonzentrale zu schaffen, welche die obengenannten Nachteile behebt.

Diese Aufgabe löst ein Verfahren zur Steuerung einer Telephonzentrale mit den Merkmalen des Patentanspruches 1.

Ferner ist es eine Aufgabe der Erfindung, eine Vorrichtung zur Durchführung des Verfahrens zu schaffen.

Diese Aufgabe löst eine Vorrichtung mit den Merkmalen des Patentanspruches 7.

Beim erfindungsgemässen Verfahren sind die Telephonleitungen zwischen Telephonzentrale und Hostess nur offen, wenn ein Gespräch mit einem Anrufer geführt wird. Dadurch werden einerseits die hohen Kosten von stets offenen Leitungen vermieden. Andererseits sind die Hostessen nicht an ihren Arbeitsplatz gebunden und können sich freier bewegen. Dies ist vorallem bei Hostessen vorteilhaft, welche gleichzeitig kleine Kinder oder Kranke zu betreuen haben. Zudem müssen sich die Hostessen nicht an feste Arbeitszeiten halten, sondern können je nach Wunsch und äusseren Umständen mehr oder weniger Stunden arbeiten. Ein weiterer Vorteil für den Arbeitgeber ist, dass er das Salär in Form eines Leistungslohnes auszahlen kann, welcher mindestens teilweise auf der Anzahl und der Länge der geführten Telephongespräche basiert.

In der nachfolgenden Beschreibung wird eine bevorzugte Variante des erfindungsgemässen Verfahrens anhand einer Ausführungsform des Erfindungsgegenstandes erläutert.

Im erfindungsgemässen Verfahren ändert sich für den Anrufer nichts. Er ruft nach wie vor bei einer Telephonzentrale an und hört ein ihn begrüssendes automatisches Tonband oder einen Tonträger. Je nach Dienstleistungsbetrieb muss er auch hier Fragen des Tonbandes über seine Telephontastatur beantworten oder eine Wahl zwischen verschiedenen Möglichkeiten treffen. Anschliessend wird er mit einer der entsprechenden, zur Verfügung stehenden Hostessen verbunden oder er wird vom Tonband darauf hingewiesen, dass zwar im Augenblick noch keine Hostess verfügbar ist, dass er jedoch bitte warten möchte.

Die im Hintergrund arbeitende Telephonzentrale ist erfindungsgemäss wie folgt aufgebaut, wobei ihr Arbeitsprinzip für den Kunden im allgemeinen nicht einsehbar ist. Die Telephonzentrale kann vom Kunden über mehrere Eingangsleitungen angerufen werden. Sie weist ein Datenverarbeitungsgerät auf, welches über die Telephontastatur eines Anrufers eingegebene Angaben registrieren und auswerten kann. Ferner kann sie einen oder mehrere Tonträger steuern, mindestens teilweise auf Grund der eingegebenen Angaben des Anrufers. Das Datenverarbeitungsgerät kann in einer erweiterten Ausführungsform auch ein Spracherkennungsmodul aufweisen.
Das Datenverarbeitungsgerät beinhaltet des weiteren eine Zeiterfassung, eine Hostessenkartei der angestellten Hostessen mit deren Telephonnummern und persönlichen Codes und eine durch das Datenverarbeitungsgerät automatisch veranderbare Anwesenheits-Kartei. Ferner kann das Datenverarbeitungsgerät verschiedenste Routinen enthalten, welche bestimmte Aktionen anhand von vorbestimmten Kriterien auslösen.
Ferner umfasst das Datenverarbeitungsgerät Mittel oder Module, mittels denen es externe Telephonleitungen anrufen und ein Beantworten eines von ihm getätigten Anrufes feststellen kann. Des weiteren sind Mittel vorhanden, um je eine Eingangsleitung mit je einem beantworteten externen Telephonanschluss zu verbinden.

Die Steuerung der Telephonzentrale verläuft im erfindungsgemässen Verfahren wie folgt:
Grundsätzlich ist die Telephonzentrale und somit das Datenverarbeitungsgerät nicht mit den Hostessen verbunden, das heisst die Verbindungs-Leitungen zwischen Telephonzentrale und externen Telephonanschlüssen der Hostessen sind nicht offen.
Im Augenblick eines Kunden-Anrufes ist nur eine der Eingangsleitungen zwischen Kunde und Telephonzentrale offen. Nach Entgegennahme des Anrufes wählt das Datenverarbeitungsgerät eine externe Telephonnummer einer Hostess an. Es können selbstverständlich mehrere Kunden-Anrufe parallel behandelt werden. Antwortet die Hostess auf den Anruf, so erstellt das Datenverarbeitungsgerät der Telephonzentrale eine Verbindung zwischen der Eingangsleitung mit dem Kunden-Anruf und der neu erstellten Verbindung zwischen Telephonzentrale und Hostess.

Damit das Datenverarbeitungsgerät entscheiden kann, welche der in seiner Hostessenkartei registrierten Hostessen es anwählen soll, führt das Datenverarbeitungsgerät ein AnwesenheitsVerzeichnis der zum Zeitpunkt des Kunden-Anrufes diensthabenden Hostessen.

Dieses Anwesenheits-Verzeichnis der Hostessen wird wie folgt geführt: jede Hostess ruft bei Arbeitsbeginn die Telephonzentrale an, wobei hierfür bevorzugterweise eine separate Nummer eingesetzt wird. Die Hostess gibt einen oder mehrere Nummerncodes über ihre Tastatur oder einen von der Telephonzentrale erfassbaren Sprachcode ein und legt anschliessend wieder auf. Das Datenverarbeitungsgerät registriert den eingehenden Anruf und vermerkt die entsprechende Hostess als diensthabend, zum Beispiel indem das entsprechende VerzeichnisBlatt der Hostess aktiviert oder indem das Verzeichnis-Blatt in das Anwesenheits-Verzeichnis aufgenommen wird.
Somit kann die Hostess, nachdem sie in das System eingekoppelt hat, die Leitung zur Telephonzentrale wieder unterbrechen und ihren sonstigen Tätigkeiten nachgehen. Auch die Beendigung der Arbeitszeit wird wiederum durch einen kurzen Telephonanruf der Hostess angezeigt, wobei sie wiederum einen oder mehrere Codes der Telephonzentrale übermittelt. Um das Ein- und Auskoppeln aus dem System zu erleichtern, kann von der Telephonzentrale ebenfalls ein Tonträger oder ein Tonband abgespielt werden, welches Anleitungen an die Hostess übermittelt, sie zu ihrem Arbeitsbeginn begrüsst oder sie nach Boendigung der Arbeitszeit verabschiedet.

Erfolgt nun ein Anruf eines Kunden an die Telephonzentrale, so wird wie oben beschrieben, das einführende automatische Tonband abgespielt. Sobald die Telephonzentrale genügend Informationen vom Kunden erhalten hat, um eine geeignete Hostess auszuwählen, wählt das Datenverarbeitungsgerät aus dem Anwesenheits-Verzeichnis eine entsprechende Hostess aus und stellt die entsprechende Telephonnummer der Hostess ein. Das Telephon der angerufenen Hostess läutet. In einer bevorzugten Variante des Verfahrens wird die Hostess bei Entgegennahme des Gesprächs über ein Tonband, das heisst akustisch, durch das Datenverarbeitungsgerät über die Angaben des Kunden informiert.

In einer anderen Variante können von der Hostess spezielle Telephonapparate verwendet werden, bei denen ihr per Display des Telephonapparates die vom Kunden erfragten Angaben optisch angezeigt werden.
Im allgemeinen Fall nimmt die Hostess den Hörer ab und nimmt so das Gespräch entgegen. Der Kunde, der in der Zwischenzeit immer noch vom automatischen Tonband unterhalten worden ist, wird nun von der Telephonzentrale mit der Hostess verbunden, wobei es für ihn keinen Unterbruch gegeben hat. Nach Beendigung des Gespräches unterbricht die Hostess die Verbindung wieder, meistens indem sie den Telephonhörer auflegt. Im Normalfall des Verfahrens ist dabei auch der Kunde vom System, insbesondere von der Telephonzentrale getrennt. Möchte er ein weiteres Gespräch führen, so muss er nochmals die Telephonzentrale anrufen. Dadurch wird verhindert, dass Telephonsüchtige zu langen Gesprächen verführt werden, wodurch ihre Telephonkosten in unbezahlbare Grössen ansteigen könnten. Es ist jedoch in einer anderen Variante des Verfahrens auch möglich, dass der Kunde wieder an die Telephonzentrale und somit an den automatischen Tonträger zurückgegeben wird.

Als weiterer Schutz gegen Telephonsüchtige kann vorgesehen sein, dass das Datenverarbeitungsgerät Eingangsleitungen, die während einer vordefinierten Zeitspanne ununterbrochen belegt waren, nach einer vordefinierten Zeit unterbricht.

Falls die von der Telephonzentrale angewählte Hostess den Anruf nach einer bestimmten Anzahl von Rufsignalen des Apparates, zum Beispiel nach vier Rufsignalen, nicht entgegennimmt, wird die nächste verfügbare Hostess angerufen, bis eine davon abnimmt. Falls im schlimmsten Falle keine Hostess abnimmt, oder alle bereits in Gesprächen verwickelt sind, so wird der Kunde vom Datenverarbeitungsgerät über einen automatischen Tonträger darauf hingewiesen, dass im Augenblick keine Hostess verfügbar ist, dass er jedoch warten möchte. Das Datenverarbeitungsgerät wird, solange der Kunde in der Leitung bleibt, die einzelnen Hostessen anrufen, bis eine davon den Anruf entgegennimmt. Falls dies zulange dauert, so kann das Datenverarbeitungsgerät den Kunden auch über einen Tonträger auffordern, den Anruf zu beenden und ihn später nochmals zu wiederholen.

Die Kriterien, nach welchen das Datenverarbeitungsgerät die diensthabenden Hostessen anruft, können beliebig gewählt werden. Beispielsweise kann überprüft werden, welche Hostessen bereits in ein Gespräch verwickelt sind, so dass diese gar nicht erst ausgewählt werden. In einer anderen Variante ist ein Verfahren, bei dem eine erfolgreich verbundene Hostess für eine nachfolgende vordefinierte Zeitdauer, zum Beispiel 10 Minuten, gesperrt ist und in diesem Zeitraum nicht mehr vom Datenverarbeitungsgerät angewählt wird. Dadurch wird auch die Wahrscheinlichkeit vermindert, dass ein Kunde zweimal hintereinander mit derselben Hostess verbunden wird. Diese Variante kann auch mit der erstgenannten gekoppelt werden.

Aufgrund der Telephonabrechnung, die der Betreiber des Dienstleistungsbetriebes erhält oder auch anhand von Erfassungen durch das Datenverarbeitungsgerät der Telephonzentrale, kann der Arbeitnehmer ermitteln, wie lange die Gespräche der einzelnen Hostessen im einzelnen und auch insgesamt gedauert haben. Dadurch ist es ihm möglich, die Gesprächstaktiken der einzelnen Hostessen gezielt zu verbessern. Andererseits kann er somit einen Leistungslohn auszahlen.

## Patentansprüche

1. Verfahren zur Steuerung einer Telephonzentrale mit einem Datenverarbeitungsgerät, welches über Eingangsleitungen eingehende Kunden-Anrufe automatisch an einen von mehreren im Datenverarbeitungsgerät registrierten externen Telephonanschlüssen von Hostessen weiterleitet,
dadurch gekennzeichnet,
dass das Datenverarbeitungsgerät ein Anwesenheits-Verzeichnis der Hostessen führt, wobei das Datenverarbeitungsgerät aufgrund eines codierten Anrufes von einem registrierten externen Telephonanschluss diesen in das Anwesenheits-Verzeichnis aufnimmt und anhand eines weiteren codierten Anrufes desselben externen Telephonanschlusses diesen aus dem Anwesenheits-Verzeichnis löscht,
dass das Datenverarbeitungsgerät nach Entgegennahme eines Kunden-Anrufes einen im Anwesenheits-Verzeichnis aufgeführten Telephonanschluss auswählt und diesen anruft und
dass das Datenverarbeitungsgerät bei Beantwortung dieses Verbindungs-Anrufes von Seiten des externen Telephonanschlusses die Verbindung zwischen Kunde und Hostess erstellt.

2. Verfahren nach Anspruch 1, dadurch gekennzeichnet, dass das Datenverarbeitungsgerät bei Nichtbeantworten des Verbindungs-Anrufes nach einer definierten Zeitspanne einen weiteren externen Telephonanschluss anruft, und dies solange wiederholt bis er eine Antwort auf einen Verbindungsanruf erhalt oder bis er eine Unterbrechung des Kunden-Anrufes registriert.

3. Verfahren nach Anspruch 1, dadurch gekennzeichnet, dass nach einem erstellten Verbindungs-Anruf das Datenverarbeitungsgerät diesen externen Telephonanschluss für eine vordefinierte Zeitspanne in seinem Anwesenheits-Register sperrt.

4. Verfahren nach Anspruch 1, dadurch gekennzeichnet, dass das Datenverarbeitungsgerät nach erstellter Verbindung zwischen Kunde und Hostess die eigene Verbindung zum Kundenanschluss unterbricht.

5. Verfahren nach Anspruch 1, dadurch gekennzeichnet, dass das Datenverarbeitungsgerät aufgrund von Angaben des Anrufers mehrere dem Anrufer abspielbare Tonträger steuert.

6. Verfahren nach Anspruch 1, dadurch gekennzeichnet, dass das Datenverarbeitungsgerät eine während einer vordefinierten Zeitspanne ununterbrochen belegte Eingangsleitung unterbricht.

7. Vorrichtung zur Durchführung des Verfahrens nach einem der Ansprüche 1 bis 6 mit einer mit Eingangsleitungen versehenen Telephonanlage, wobei die Telephonanlage ein Datenverarbeitungsgerät aufweist, welches mit Mitteln zum Anrufen von externen Telephonanschlüssen und Mitteln zur Erstellung von Verbindungen zwischen je einer der Eingangsleitungen der Telephonanlage und je einem der angewählten externen Telephonanschlüssen versehen ist.
